Europäisches Patentamt

(19) **European Patent Office**

Office européen des brevets

(11) Veröffentlichungsnummer: **0 103 116**
**B1**

(12) # EUROPÄISCHE PATENTSCHRIFT

(45) Veröffentlichungstag der Patentschrift:
**23.09.87**

(51) Int. Cl.⁴: **G 01 L 5/28**

(21) Anmeldenummer: **83107235.0**

(22) Anmeldetag: **23.07.83**

(54) **Verfahren zur programmgesteuerten Prüfung von Kraftfahrzeug-Bremseinrichtungen.**

(30) Priorität: **27.07.82  HU 241282**

(43) Veröffentlichungstag der Anmeldung:
**21.03.84 Patentblatt 84/12**

(45) Bekanntmachung des Hinweises auf die Patenterteilung:
**23.09.87 Patentblatt 87/39**

(84) Benannte Vertragsstaaten:
**AT BE DE FR GB IT NL**

(56) Entgegenhaltungen:
**DE-A-2 917 247**
**DE-A-3 017 410**
**DE-B-2 229 067**

(73) Patentinhaber: **Közlekedéstudományi Intézet, Thán Károly u. 3/5, Budapest 1119 (HU)**
Patentinhaber: **VOLAN 10, sz. Vallalat, Szeged (HU)**

(72) Erfinder: **Faragó, László, Dipl.- Ing., Bója u. 24, H-1182 Budapest (HU)**
Erfinder: **Flamisch, Otto, Dr. Dipl.- Ing., Arad u. 32, H-1062 Budapest (HU)**
Erfinder: **Gál, Tibor, Dr. Dipl.- Ing., Mezökövesd u. 6, H-1116 Budapest (HU)**
Erfinder: **Laszló, Arpád, Dipl.- Ing., Radna u. 7, H-1026 Budapest (HU)**
Erfinder: **Tamási, Attila, Dipl.- Ing., Gulyás u. 16, H-1112 Budapest (HU)**
Erfinder: **Csöry, Valér, Dipl.- Ing., Korányi fasor 5, H-6720 Szeged (HU)**
Erfinder: **Mihály, Zoltán, Dipl.- Math., Csongrádi sgt. 88/a, Szeged (HU)**
Erfinder: **Tóth, Károly, Dipl.- Math., Londoni krt. 9, H-6724 Szeged (HU)**
Erfinder: **Wábits, Györö, Dipl.- Ing., Hroska tér 3/c, H-6723 Szeged (HU)**

(74) Vertreter: **Brommer, Hans Joachim, Dr.- Ing., Patentanwälte Dipl.- Ing. R. Lemcke Dr.- Ing. H.J. Brommer Amalienstrasse 28 Postfach 4026, D-7500 Karlsruhe 1 (DE)**

EP 0 103 116 B1

## Beschreibung

Gegenstände der Erfindung sind ein Verfahren nach dem Patentanspruch 1 und eine Vorrichtung nach dem Patentanspruch 2, durch die eine Erhöhung der Meßgenauigkeit und eine objektivere Auswertung erreicht werden.

Zur Prüfung von Kraftfahrzeug-Bremseinrichtungen sind Bremskraftrollenprüfstände bekannt. Auf diesen Prüfständen werden die Bremskräfte in Abhängigkeit von der Pedalkraft oder dem Bremskammerdruck an der rechten und linken Seite des Kraftfahrzeuges gleichzeitig gemessen. An den zwei Seiten müssen die Größen der zur gegebenen Pedalkraft oder der zum gegebenen Bremskammerdruck gehörenden Bremskräfte, wie auch die Schwankungen der Bremskräfte, weiterhin das Ausmaß der Abweichungen der Meßwerte zwischen den zwei Seiten bewertet werden.

Die Genauigkeit des Bewertungsergebnisses ist immer durch mehrere Faktoren beeinflußt. Solche Faktoren sind:

1) Reibungsverluste des Prüfstandes,
2) die Ausbildung der Systeme der Bremskraftmessung und der Pedalkraftmessung bzw. Bremskammerdruckmessung,
3) die Zeitkonstanten dieser Systeme,
4) die Gleichheit der Zeitkonstanten des rechts- und linksseitigen Bremskraftmessers,
5) Anzeigeart bzw. Registrierart,
6) die Betätigung der Bremseinrichtung während der Messung,
7) die fortlaufende Beobachtung des Rutschens zwischen den Rollen des Prüfstandes und den Rädern,
8) die Genauigkeit des Ablesens der angezeigten oder registrierten Werte,
9) die Trennung der in den Werten summierten Wirkungen,
10) das Vorhandensein der technischen Anforderungen bezüglich des Bremssystems des Kraftfahrzeugtyps, und schließlich
11) die Durchführung der Bewertung und der Fehlerfeststellung.

Darüber hinaus können noch einige, von Messfahren und von der Meßeinrichtung unabhängige Faktoren wie Wärmezustand der Bremseinrichtung, Reifendruck usw. eine Wirkung auf die Prüfvorgänge ausüben, wobei aber diese Wirkungen durch eine zweckmäßige Vorbereitung des Kraftfahrzeuges beseitigt werden können.

Die Genauigkeit der Bremsprüfung ist von den konstruktiven Kennzeichen des Prüfstandes, von den Kennzeichen des Meßsystems sowie von den Fähigkeiten und der Aufmerksamkeit der die Messung durchführenden Person abhängig.

Durch die DE-B-22 29 067 ist ein Verfahren gemäß dem Oberbegriff von Patentanspruch 1 bekannt, wobei jedoch aus die Pedalkraft fortlaufend überwacht, die Bremskraft hingegen immer nur dann gemessen wird, wenn die Pedalkraft mit einem vorgegebenen Sollwert übereinstimmt. Die Bremskraft wird sodann in einer Vergleichseinrichtung mit ihrem Sollwert verglichen.

Dabei handelt es sich um eine Augenblicksmessung. Schnell aufeinanderfolgende Meßwert-Aufnahmen im Sinne der vorliegenden Anmeldung sind nicht möglich und dementsprechend hat eine eventuelle Bremstrommel-Ovalität verfälschenden Einfluß auf das Meßergebnis.

Während der Bremsprüfung überlagert sich die Erschütterung des Fahrzeuges - trotz des Willens der die Prüfung durchführenden Person - auf des Bremspedal, wodurch die Bremskraft eine entsprechende, ungewollte Veränderung erfährt, zusätzlich wird der Bremskraft eine Schwankung abweichender Frequenz durch die Bremstrommel-Ovalität überlagert. Da auch der Vergleich der Bremsen der rechts- und linksseitigen Räder eine Forderung ist, muß eine Bewertung auch an beiden Seiten und im Vergleich miteinander durchgeführt werden.

Hiervon ausgehend liegt die Aufgabe der vorliegenden Erfindung darin, die Meßgenauigkeit zu erhöhen, insbesondere Bedienungsfehler durch ein Steuerprogramm auszuschalten und eine objektive Auswertung zu sichern. Schließlich soll auch eine schriftliche Aufzeichnung der Meßergebnisse und der Bewertung der Meßgrößen möglich sein.

Diese Erfindung wird bezüglich des Verfahrens durch die Merkmale des Patentanspruchs 1, bezüglich der Vorrichtung zur Durchführung dieses Verfahrens durch die Merkmale des Anspruches 2 gelöst.

Der Hauptvorteil der Erfindung liegt darin, daß die infolge der Erschütterungen des Kraftfahrzeuges oder infolge der Unaufmerksamkeit der die Messung durchführenden Person entstehenden Fehler in der Pedalkraft oder im Bremskammerdruck dazu verwendet werden, um die gemessenen Bremskraftwerte zu korrigieren.

Außerdem erlaubt es das beschriebene Verfahren, die Messung mit im Voraus festgesetzten Werten für die Pedalkraft oder für den Bremskammerdruck durchzuführen, wobei die Messung und Bewertung der Bremskräfte nur innerhalb des im Programm festgesetzten Bereiches der Pedalkraft bzw. des Bremskammerdruckes erfolgt, worüber das Bedienungspersonal durch ein Signalsystem informiert wird.

Ein weiterer Vorteil besteht darin, daß durch Signalgeber geringer Zeitkonstante und durch die schnelle, häufig wiederholte Meßwertaufnahme die infolge der Veränderung der Pedalkraft bzw. des Bremskammerdruckes und die infolge der davon unabhängigen Auswirkungen (durch Bremstrommel-Ovalität, Spalte etc.) entstehenden Veränderungen der Bremskraft abgetrennt werden und daß die Korrektur der gemessenen Bremskraft in. Abhängigkeit von der Veränderung der Pedalkraft bzw. des Bremskammerdruckes zwischen vorgegebenen Grenzen erfolgt.

Ein weiterer Vorzug besteht darin, daß das Vergleichen der gemessenen Werte mit den Typendaten und mit den zur richtigen Funktion gehörenden Werten automatisch erfolgt und daß alle Daten in gedruckter Form dargestellt und zwecks weiterer Bearbeitung in einen Rechenautomaten eingegeben werden können.

Mit dem erfindungsgemäßen Verfahren kann die Messung um eine Größenordnung genauer durchgeführt werden und infolge der geringen Zeitkonstante der Bewertungseinheit und der großen Betriebsgeschwindigkeit der Steuereinheit können die während der Bremsprüfung vorkommenden schnellen Vorgänge verarbeitet und analysiert werden.

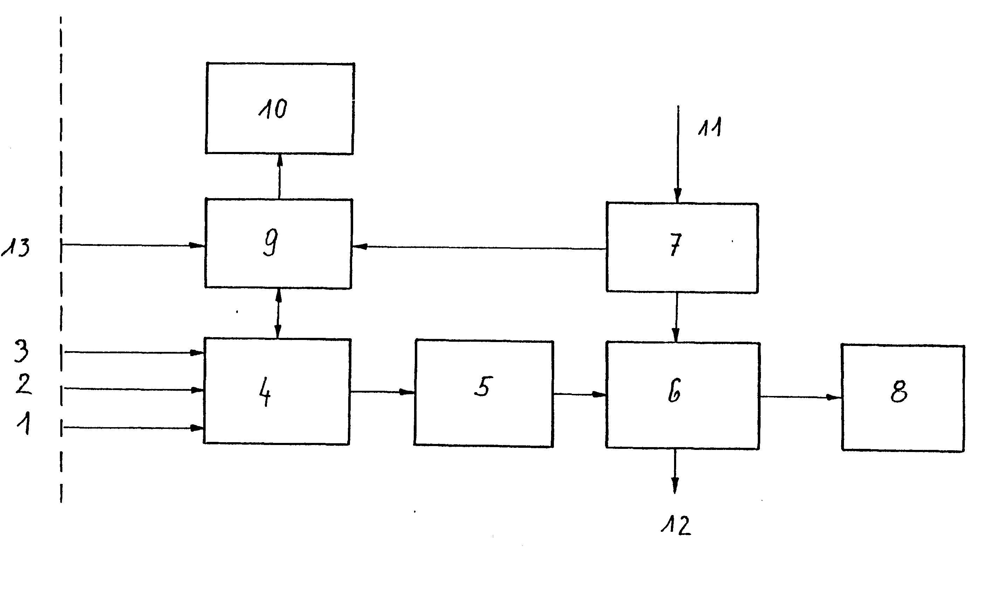

Ein Ausführungsbeispiel der Erfindung wird anhand der beiliegenden Zeichnung näher erläutert.

Das Meßverfahren wird mittels einer Steuereinheit 9 geesteuert. Das zu messende Kraftfahrzeug wird auf den nicht dargestellten Rollenprüfstand zur Bremskraftmessung gestellt und ein elektrischer Signalgeber 1 wird zur Bremskammerdruck-Messung angeschlossen. Ein elektrischer linksseitiger Signalgeber 2 und ein rechtsseitiger Signalgeber 3 zur Bremskraftmessung, weiterhin ein das Rutschen fühlender elektrischer Signalgeber 13 sind in den Prüfstand eingebaut. Die Signalgeber 1, 2, 3 sind an einem Meßwertaufnehmer 4, der Signalgeber 13 ist an die Steuereinheit 9 angeschlossen.

In eine Datenspeichereinheit 7, sind die für verschiedene zu messende Kraftfahrzeuge charakteristischen technischen Daten durch einen Eingang 11 eingespeist. Am Anfang der Messung werden die für das gegebene Kraftfahrzeug charakteristischen Daten aus der Datenspeichereinheit 7 in die Steuereinheit 9 eingegeben.

Während der Messung wird durch die Steuereinheit 9 an den Meßwertaufnehmer 4 ein Befehl gegeben, wodurch die Signalgeber 1, 2, 3 die Werte des Bremskammerdruckes und der links bzw. rechtsseitigen Bremskräfte gleichzeitig registrieren. Aus dem Meßwertaufnehmer 4 werden die Meßwerte in die Steuereinheit 9 eingegeben, die die Größe des Bremskammerdruckes automatisch kontrolliert, die Richtung der nötigen Änderung bestimmt und die Erfüllung der Messungen an den einzelnen Meßpunkten prüft. Die Steuereinheit 9 betatigt Informationselemente, z. B. Signallampen einer optischen Signaleinheit 10, wodurch das die Messung durchführende Personal über den Meßvorgang informiert wird. Weiterhin wird das Personal durch Übertragung des Signals des Signalgebers 13 auf die optische Signaleinheit 10 auch über eventuelles Rutschen informiert.

Aus dem Meßwertaufnehmer 4 werden die Meßwerte auf eine Korrektureinheit 5 übertragen, wo eine Korrektur der Meßwerte durchgeführt wird, indem die von der Funktion des Bremssystems unabhängig entstandenen Abweichungen z. B. infolge der Erschütterung des Kraftfahrzeuges, oder infolge der Unaufmerksamkeit der die Messung durchführenden Person entstehenden Fehler usw./von den für den Zustand des Bremssystems charakteristischen Signalen abgetrennt werden. Die derweise korrigierten Signale werden in die Datenverarbeiter- und Bewertungseinheit 6 übertragen.

Zum Eingang der Datenverarbeiter- und Bewertungseinheit 6 wird auch die Datenspeichereinheit 7 angeschlossen. Die Datenverarbeitungs- und Bewertungseinheit 6 bestimmt die Grenz- und Mittelwerte der Bremskräfte, die prozentualen Werte der Bremskraftschwankung im Vergleich zum Mittelwert und die prozentuale Abweichung zwischen den an beiden Seiten aufgenommenen Bremskraft-Mittelwerten, vergleicht diese Daten mit denjenigen Daten, die als Typenkenngrößen aus dem Datenspeicher 7 in die Datenverarbeitungs- und Bewertungseinheit 6 eingetragen wurden.

Aus der Datenverarbeitungs- und Bewertungseinheit 6 werden die die qualität und den Zustand der Bremse charakterisierenden Daten in die Daten- und Ergebniserhebereinheit 8 eingetragen. Die Daten- und Ergebniserhebereinheit 8 gibt über die Messung ein mit Drucker hergestelltes Meßprotokoll.

Der Ausgang 12 der Datenverarbeiter- und Bewertereinheit 6 kann an den Rechenautomaten einer komplexen kraftfahrzeugdiagnostischen Einrichtung angeschlossen werden.

## Patentansprüche

1. Verfahren zur programmgesteuerten Kontrollmessung von Kraftfahrzeug-Bremseinrichtungen auf einem Rollenprüfstand zur Bremskraftmessung und zur Bewertung der Meßergebnisse, wobei die zusammengehörenden Wertpaare der Bremskraft und der Bremspedalkraft oder des Bremskammerdruckes durch schnell aufeinanderfolgende Meßwert-Aufnahmen festgestellt werden,
dadurch gekennzeichnet,
daß die festgestellten Brennskraftwerte korrigiert werden entsprechend einer ungewollten Abweichung der Pedalkraft oder des Bremskammerdruckes und daß schließlich aus den korrigierten Bremskraftwerten die Grenz- und Mittelwerte der Bremskräfte, der prozentuale Wert der Bremskraftschwankung um den Mittelwert und die prozentuale Abweichung zwischen den an beiden Seiten aufgenommenen Bremskraft-Mittelwerten bestimmt werden.

2. Vorrichtung zur Durchführung des Verfahrens nach Anspruch 1, zur programmgesteuerten Kontrollmessung von Kraftfahrzeug-Bremseinrichtungen auf einem Rollenprüfstand zur Bremskraftmessung und zur Bewertung der Meßergebnisse, wobei ein Meßwertaufnehmer (4) für die an beiden Seiten aufgenommenen Bremskräfte und für die Pedalkraft oder den Bremskammerdruck vorgesehen ist, der an eine Steuereinneit (9) angeschlossen ist, die Daten aus einer Datenspeichereinheit (7) erhält und die Größe der Pedalkraft automatisch kontrolliert, wobei die Bremskraftsignale in eine Datenverarbeitungs- und Bewertungseinheit (6) gelangen, dadurch gekennzeichnet, daß die Steuereinheit (9) die nötige Änderung der Bremskraft bestimmt, wozu der Meßwertaufnehmer (4) zusätzlich an eine Korrektureinheit (5) angeschlossen ist.

**Claims**

1. A process for the program-controlled regulatory testing of motor vehicle brake devices on a roller test frame for measuring braking force and for evaluating the measurement results, wherein the associated value pairs of the brake force and the brake pedal force or the brake chamber pressure are ascertained by means of rapidly successive measurement value readings, characterised in that the ascertained brake pressure values are corrected according to an undesired deviation of pedal force or of the brake chamber pressure, and that, lastly, from the corrected brake pressure values the limit and mean values of the brake forces, the percentage value of brake pressure fluctuation about the mean value and the percentage deviation between the mean values of the brake force taken at both sides are determined.

2. Apparatus for carrying out the process according to claim 1, for the program-controlled regulatory testing of motor vehicle brake devices on a roller test frame for measuring braking force and for evaluating the measurement results, wherein there is provided a measurement value taker (4) for the brake forces at both sides and the pedal forces or the brake chamber pressure, the measurement value taker being connected to a control unit (9) which receives data from a data storage unit (7) and automatically controls the magnitude of the pedal force, whereby the brake force signals are passed to a data processing and evaluating unit (6), characterised in that the control unit (9) determines the necessary change of braking force, to which end the measurement value taker (4) is additionally connected to a correction unit (5).

**Revendications**

1. Procédé pour réaliser la mesure de contrôle, commandée par programme, de dispositifs de freinage de véhicules automobiles, sur un banc d'essais à rouleaux pour réaliser la mesure de la force de freinage et l'évaluation des résultats de mesure, les couples appariés de valeurs de la force de freinage et de la force appliquée à la pédale de frein ou de la pression regnant dans la chambre de freinage étant fixés par des enregistrements de valeurs de mesures se succédant rapidement, caractérisé en ce qu'on corrige les valeurs déterminées de la force de freinage conformément à un écart involontaire de la force appliquée à la pédale ou de la pression régnant dans la chambre de frein, et qu'on détermine enfin, à partir des valeurs corrigées de la force de freinage, les valeurs limites et les valeurs moyennes des forces de freinage, la valeur en pourcentage de la variation de la force de freinage autour de la valeur moyenne et l'écart en pourcentage entre les valeurs moyennes de la force de freinage enregistrées sur les deux côtés.

2. Dispositif pour la mise en oeuvre du procédé selon la revendication 1, pour la mesure de contrôle, commandée par programme, de dispositifs de freinage de véhicules automobiles sur un banc d'essais à rouleaux pour réaliser la mesure de la force de freinage et l'évaluation des résultats de mesure, et dans lequel il est prévu un enregistreur (4) des valeurs de mesure pour les forces de freinage détectées sur les deux côtés et pour la force exercée sur la pédale ou pour la pression régnant dans la chambre de freinage, cet enregistreur étant raccordé à une unité de commande (9) qui reçoit les données provenant d'une unité formant mémoire de données (7) et contrôle automatiquement l'intensité de la force appliquée à la pédale, et dans lequel les signaux de la force de freinage parviennent dans une unité (6) de traitement et d'évaluation des données, caractérisé en ce que l'unité de commande (9) détermine la variation nécessaire de la force de freinage et que, pour ce faire, l'enregistreur (4) des valeurs de mesure est raccordé en outre à une unité de correction (5).

0 103 116